Europäisches Patentamt

European Patent Office

Office européen des brevets

(19)

(11) Publication number: **0 110 459**
**B1**

# (12) EUROPEAN PATENT SPECIFICATION

(45) Date of publication of patent specification: **27.01.88**

(51) Int. Cl.⁴: **H 04 L 9/00**

(21) Application number: **83201594.5**

(22) Date of filing: **08.11.83**

(54) Method and arrangement for rendering enciphered information reproducible.

(30) Priority: **11.11.82 NL 8204360**

(43) Date of publication of application:
**13.06.84 Bulletin 84/24**

(45) Publication of the grant of the patent:
**27.01.88 Bulletin 88/04**

(84) Designated Contracting States:
**CH DE FR GB IT LI SE**

(56) References cited:
EP-A-0 087 758
DE-B-2 639 806
GB-A- 999 328
GB-A-1 500 126

(73) Proprietor: **N.V. Philips' Gloeilampenfabrieken**
**Groenewoudseweg 1**
**NL-5621 BA Eindhoven (NL)**

(72) Inventor: **Van den Ende, Antonius Cornelis**
**Johannes**
**c/o INT. OCTROOIBUREAU B.V. Prof. Holstlaan 6**
**NL-5656 AA Eindhoven (NL)**

(74) Representative: **Van Schaik, Johannes**
**Wilhelmus et al**
**INTERNATIONAAL OCTROOIBUREAU B.V. Prof.**
**Holstlaan 6**
**NL-5656 AA Eindhoven (NL)**

Courier Press, Leamington Spa, England.

## 0 110 459

**Description**

The invention relates to a method and an arrangement for rendering enciphered information reproducible, which information consists of a series of characters of m bits each blocks of $n$ characters each being formed in the series of characters, which blocks therefore comprise n×m bits and a block being subdivided into $m$ groups of $n$ bits each.

Characters of five and eight bits, respectively, are utilized, for example, in the generally known telex code (CCITT No. 2) and in the CCITT-ISO code No. 5. These codes comprise characters which represent letters, digits and control symbols. Control symbols are, for example, the character "carriage return" and the characters "new line". When clear text is enciphered, arbitrary control characters may be present in the enciphered text (the cryptogram). If the cryptogram is transmitted and is then deciphered, these control characters are converted into the original clear text. However, a problem arises if the cryptogram is recorded, for example, by means of a line printer. The line printer will then respond to these control characters arbitrarily present in the enciphered text, as a result of which the lay-out of the cryptogram is disturbed.

DE—C—2553.897 proposes to solve this problem by transmitting non-enciphered each character representing a control character, and by preventing other characters being reproduced as control characters due to the enciphering.

In GB—A—999.328 a ciphering system is disclosed in which any code representing a central symbol is eliminated in the transmission path. For that purpose use is made of the fact that all control characters present a common distinctive characterization; for instance in a fire-element code, all the control symbols are made of codes wherein the first and last element are identical *i.e.* have either the form 0XXX0 or 1XXX1 where X represents a bit element that can assume any value. The control characters are basically eliminated in that the last element of the fire-element control symbol is inverted into its complement.

The invention has for its object to provide an alternative solution by which in a simple manner and with a minimum effort control characters are prevented from occurring in the cryptogram to be reproduced. According to the invention, the method of reproducing enciphered information of the above type is therefore characterized in that the method comprises the following steps:

— a storage device is addressed successively at the address given by each of the $m$ groups and the contents—representations of reproducible characters of $m$ bits each—of each of the addressed locations are read out;
— a series of said representations of reproducible characters is supplied to and output of the storage device for application to a reproducing device.

In a preferred embodiment, the method of reproducing enciphered information according to the invention is constructed so that m=5 and n=4, that the 5 bits of each character of a block of four such characters are subdivided into a first part of 4 bits and a second part of 1 bit, so that the first parts of each character constitute respective groups and the second parts of the four characters together constitute a further group.

It is favourable when the first part is constituted by the four most significant bits and the second part is constituted by the least significant bit.

According to the invention, an arrangement for rendering enciphered information reproducible, which information consists of a series of characters of $m$ bits each, is characterized in that the arrangement comprises: a first storage device, which comprises $n$ locations for storing a block of $n$ characters; a register, of which an input is connected to an output of the first storage device, and a first address counter for cyclically passing through $n$ counter positions, which address counter is connected to an address decoder of the first storage device, whereby at least one bit of the character present in the addressed storage location in each counter position is destructively read out and supplied to the register in that the arrangement further comprises a second address counter with $m$ counter positions which is connected to a second address decoder of the first storage device and to the said register for successively addressing when the $m$ counter positions are cyclically passed through, the respective storage locations of the first storage device and the said register, in that the arrangement further comprises a read-only memory which is provided with an address decoder which is connected to a further output of the first storage device and to an output of the register for addressing those storage locations in the read-only memory whose address corresponds to the contents of the storage locations of the first storage device and the register, and in that the read-only memory has an output to which the contents of the addressed storage locations of the read-only memory are successively supplied.

Embodiments of the invention and its advantages will now be described in greater detail with reference to the drawings. In the drawings:

Figure 1a shows an embodiment of an arrangement for carrying out the method according to the invention;

Figure 1b is a schematic representation of the contents of storage or register locations as used in the arrangement shown in Figure 1a;

2

**0 110 459**

Figure 2 shows a table stating the occurring bit combinations and the characters associated therewith in the CCITT code No. 2, and

Figure 3 shows a flow chart of a further embodiment of the method according to the invention.

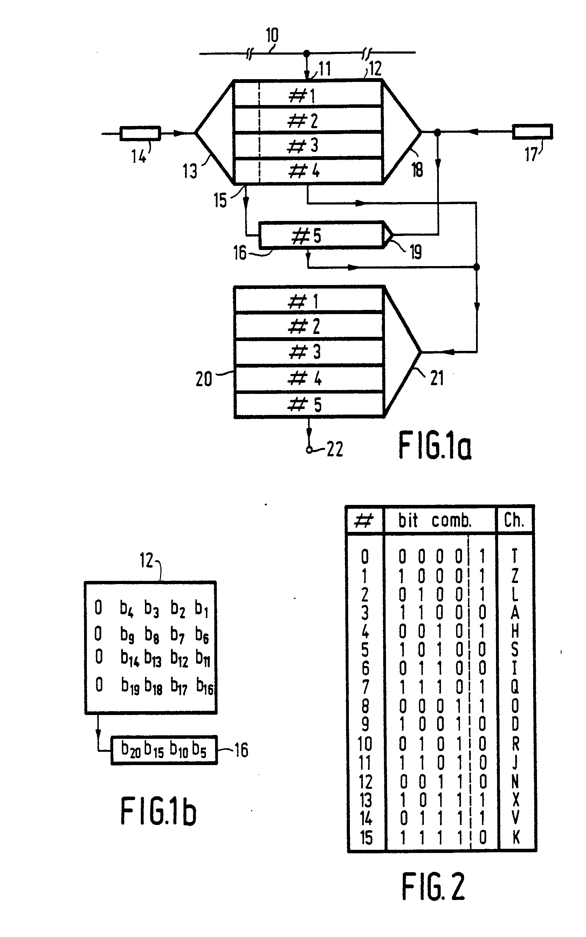

Information in enciphered form is present on a transmission line 10 of the arrangement shown in Figure 1a. The information consists of a series of characters, each character consisting of $m$ bits. If, for example, the information is coded according to the CCITT code No. 2, a character consists of 5 bits. If the CCITT code No. 5 is used, a character consists of 8 bits. It will be assumed in the further description that $m=5$, although the invention is not limited thereto. The characters represent in addition to digit, letter and punctuation symbols, control symbols, such as "carriage return" and "new line". The enciphered information on the transmission line is obtained by enciphering a clear text, which means that a character in the clear text is reproduced as a (quasi) arbitrary different character and that this different character is substituted for the original character. The enciphered information therefore comprises control symbols distributed over the cryptotext. The enciphered information is transmitted to the addressed location and is deciphered there in order to obtain the original clear text. In cases in which it is desired to record the text of an enciphered text, the problem arises that the control symbols occurring in the enciphered message are interpreted as such by the device by means of which this text is recorded. Due to the arbitrary occurrence of characters representing control symbols, the lay-out of the text of the enciphered text (the cryptogram) will be entirely disturbed. This is avoided by means of the arrangement shown in Figure 1a, which is connected between a source of enciphered information and a device, for example, a line printer, which records the cryptogram.

The characters comprising $m$, in the example chosen 5, bits are grouped in blocks of $n$ characters. The $n$ characters of one block are read into the $n$ storage locations of a storage device 12, which is connected through an input 11 to the transmission line 10. Each storage location can accommodate at least $m$ (5) bits. With the given choice $m=5$, it is advantageous to choose $n=4$. This is for *inter alia* the following reason. The English aliphabet in principle comprises 26 printable characters (in other languages, this number may be larger or smaller). If a group of $p$ printable characters is chosen, on the condition that $p$ is a power of 2 (i.e. $2^n$), for the English alphabet $p$ will be at most 16, to which corresponds a value of $n=4$. The storage device 12 is addressed through the address decoder 13 by means of a modulo-n counter 14 (therefore in the example chosen a modulo-4 counter). A register 16 is connected to an output 15 of the storage device 12. The register 16 can comprise at least $n$ (4) bits. When the successive storage locations of the storage device 12 are successively addressed, each time one bit (the least significant bit, for example) of the character present at the relevant storage location is transmitted to the register 16 and is erased in the storage device 12. If the bits of one block of 4 characters of 5 bits each are enumerated as $b_1$, $b_2$, $b_3$ ... $b_{19}$, $b_{20}$, after one complete cycle of the modulo-4 counter 14 the storage device 12 will comprise the bits $b_1$—$b_4$, $b_6$—$b_9$, $b_{11}$—$b_{14}$ and $b_{16}$—$b_{19}$ and the register 16 will comprise the bits $b_5$, $b_{10}$, $b_{15}$ and $b_{20}$, according to the configuration shown in Figure 1b.

The arrangement further comprises another counter 17, for example, a modulo-m counter. This counter is connected through an address decoder 18 to the storage device 12 and through an address decoder 19 to the register 16. If the modulo-m counter 17 passes through m (5) values, the $n$ (4) storage locations of the storage device 12 and the only location in the register 16 are successively addressed. A word consisting of 4 bits is present at each of these locations. These words are utilized as an address for a read-only memory. A further output of the storage device 12 and an output of the register 16 are connected for this purpose to the address decoder 21 of the read-only memory 20. The contents of the read-only memory are represented in the table of Figure 2. The first column of the table indicates the list of possible addresses in decimal representation, whilst the second column indicates the contents of the storage location associated with a given address and the third column indicates which character in the CCITT code No. 2 corresponds to the bit combinations in the second column. Thus, for example, the word of 4 bits (the extreme left-hand bit is the least significant bit and the extreme right-hand bit is the most significant bit), 1011, *i.e.* the number, 13, is the address at which is stored a 5-bit word, 11010, which represents a character (J), which is printable, and therefore does not represent a control symbol. Thus, a flow of 5-bit characters becomes available at the output 22 of the read-only memory 20, which flow is free from undesired control symbols. An advantage of the invention is that without influencing the enciphering equipment, a method is provided which permits of recording the enciphered information in a suitable manner. This advantage becomes particularly manifest in cases in which existing cryptographic equipment is to be provided with these means.

As has been already stated, the method according to the invention can also be used for other values of $n$ and $m$. For example, in a system in which the CCITT code No. 5 is used, a character will consist of 8 bits ($m=8$). By forming blocks consisting of 5 characters ($n=5$) it is possible with the use of 3 registers of 5 bits each to address a read-only memory which will comprise 32 possible printable characters of 8 bits. An embodiment comprising a read-only memory, which is suitable both for printing characters in the CCITT code No. 2 and for printing characters in the code No. 5, is obtained if blocks consisting of 4 characters are formed. With the use of 4 registers of 4 bits each, a read-only memory can then be addressed, which also comprises 16 printable characters of 8 bits.

3

**0 110 459**

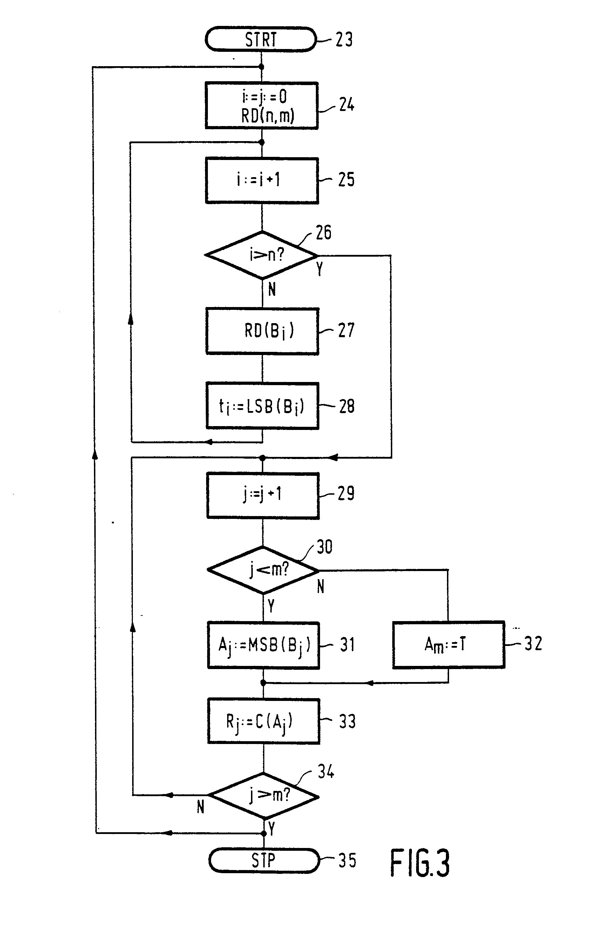

Figure 3 shows a flow chart of a further embodiment of the method according to the invention. The following explanatory texts relate to the inscriptions of the geometric figures explaining the functions and the states of the method of rendering enciphered information reproducible. It should be noted that such a time sequence of functions and associated states of the method of rendering enciphered information reproducible can be realized in universal sequential programmable logic circuits, such as commercially available microprocessors with associated storage and peripheral equipment.

| Reference numeral | Inscription | Description |
|---|---|---|
| 23 | STRT | Start; |
| 24 | i:=0;<br>j:=0;<br>RD (n,m) | the parameters $i$ and $j$ are given a value 0. The values of the parameters $m$ and $n$ are read in; |
| 25 | i:=i+1 | the parameter $i$ is incremented by one; |
| 26 | i>n? | the instantaneous value of $i$ is compared with the value of $n$ reading if $i$ is smaller than or equal to $n$, the next step in the method is the processing step represented by the geometric figure 27. In case $i>n$, the next step is that represented by the geometric figure 29; |
| 27 | RD ($B_i$) | the $i^{th}$ character of $m$ bits, $B_i$, of a block of n×m bits is read in; |
| 28 | $t_i$:=LSB ($B_i$) | the parameter $t_i$ is given the value of the least significant bit of the $i^{th}$ group of $m$ bits, $B_i$; the next step is that represented by the geometric figure 25; |
| 29 | j:=j+1 | the parameter $j$ is incremented by one; |
| 30 | j<m? | the instantaneous value of $j$ is compared with the value of $m$ read in. If $j$ is smaller than $m$, the next step in the method is the processing step represented by the geometric figure 31. In case j=m, the next step is that represented by the geometric figure 32; |
| 31 | $A_j$:=MSB ($B_j$) | the $j^{th}$ group of $n$ bits, $A_j$, is constituted by the $n$ most significant bits of the corresponding character $B_j$; |
| 32 | $A_m$:=T | the $m^{th}$ group of $n$ bits, $A_m$, is constituted by the $n$ least significant bits $t_i$ (i=1, 2, ... n) obtained as a result of the processing step represented by the geometric figure 28; |

4

| Reference numeral | Inscription | Description |
|---|---|---|
| 33 | $R_j := C(A_j)$ | at the address $A_j$ of a storage device, the contents $R_j$ of the associated storage location are read out. $R_j$ is the printable character of m bits; |
| 34 | j>m? | if $j$ is smaller than or equal to $m$, the next step is the processing step represented by the geometric figure 29. If $j$ is larger than $m$, the whole method is carried out again for a next block of n×m bits; |
| 35 | STP | Stop. |

**Claims**

1. A method of rendering enciphered information reproducible, which information consists of a series of characters of *m* bits each, blocks of *n* characters each being formed in the series of characters, which blocks therefore comprise n×m bits, and a block being subdivided into *m* groups of *n* bits each, characterized in that the method comprises the following steps: a storage device is addressed successively at the address given by each of the *m* groups and the contents—representations of reproducible characters of *m* bits each—of each of the addressed locations are read out; a series of said representations of reproducible characters is supplied to an output of the storage device for application to a reproducing device.

2. A method as claimed in Claim 1, characterized in that *m*=5 and *n*=4, in that the 5 bits of each character of a block of four such characters are subdivided into a first part of 4 bits and a second part of 1 bit, and in that the first parts of each character constitute respective groups and the second parts of the four characters together constitute a further group.

3. A method as claimed in Claim 2, characterized in that the first part is constituted by the four most significant bits and the second part is constituted by the least significant bit.

4. An arrangement for rendering enciphered information reproducible, which information consists of a series of characters of *m* bits each, characterized in that the arrangement comprises a first storage device (12), which comprises *n* locations for storing a block of *n* characters; a register (16), of which an input is connected to an output of the first storage device (12), and a first address counter (14) for cyclically passing through *n* counter positions, which address counter is connected to an address decoder (13) of the first storage device, whereby at least one bit of the character present in the addressed storage location in each counter position is destructively read out and supplied to the register (16), in that the arrangement further comprises a second address counter (17) with *m* counter positions which is connected to a second address decoder (18) of the first storage device and to the said register (16) for successively addressing when the *m* counter positions are cyclically passed through, the respective storage locations of the first storage device and the said register, in that the arrangement further comprises a read-only memory (20) which is provided with an address decoder (21) which is connected to a further output of the first storage device and to an output of the register for addressing storage locations in the read-only memory whose address corresponds to the contents of the storage locations of the first storage device and the register, and in that the read-only memory has an output to which the contents of the addressed storage locations of the read-only memory are successively supplied.

**Patentansprüche**

1. Verfahren zur Ermöglichung einer Wiedergabe verschlüsselter Information, die aus einer Reihe von Zeichen zu je m Bits besteht, wobei in den Reihen von Zeichen Blöcke zu je n Zeichen gebildet werden, wobei diese Blöcke folglich n×m Bits aufweisen und wobei ein Block in m Gruppen von je n Bits aufgeteilt ist, dadurch gekennzeichnet dass das Verfahren die folgenden Schritte aufweist: eine Speicheranordnung wird nacheinander auf den Adressen adressiert, die durch jede der m Gruppen gegeben sind, und der Inhalt—Darstellungen wiedergebbarer Zeichen zu je m Bits—jeder der adressierten Stellen wird ausgelesen; eine Reihe der genannten Darstellungen wiedergebbarer Zeichen wird an einem Ausgang der Speicheranordnung geliefert zum Zuführen zu einer Wiedergabeanordnung.

2. Verfahren nach Anspruch 1, dadurch gekennzeichnet, dass m=5 und n=4 ist, dass die 5 Bits jedes Zeichens eines Blocks aus vier solcher Zeichen in einen ersten Teil von 4 Bits und einen zweiten Teil van 1

**0 110 459**

Bit aufgeteilt werden und dass die ersten Teile jedes Zeichens betreffende Gruppen bilden und die zweiten Teile von den vier Zeichen zusammen eine weitere Gruppe bilden.

3. Verfahren nach Anspruch 2, dadurch gekennzeichnet, dass der erste Teil durch die vier signifikantesten Bits und der zweite Teil durch das am wenigstens signifikante Bit gebildet wird.

4. Anordnung zur Ermöglichung einer Wiedergabe verschlüsselter Information, welche Information aus einer Reihe von Zeichen zu je m Bits besteht, dadurch gekennzeichnet, dass die Anordnung eine erste Speicheranordnung (12) aufweist die n Stellen aufweist zum Speichern eines Blockes von n Zeichen; ein Register (16), von dem ein Eingang mit einem Ausgang der ersten Speicheranordnung (12) verbunden ist, und einen ersten Adressenzähler (14) zum zyklischen Durchlauf durch n Zählerpositionen, wobei dieser Adressenzähler mit einem Adressendecoder (13) der ersten Speicheranordnung verbunden ist, wobei wenigstens ein Bit des an der adressierten Speicherstelle in jeder Zählerposition vorhandenen Zeichens auf destruktive Weise ausgelesen und dem Register (16) zugeführt wird, dass die Anordnung weiterhin einen zweiten Adressenzähler (17) mit m Zählerpositionen aufweist der mit einem zweiten Adressendecoder (18) der ersten Speicheranordnung und mit dem genannten Register (16) verbunden ist zum aufeinanderfolgenden Adressieren, wenn die m Zählerpositionen zyklisch durchlaufen werden, der betreffenden Speicherstellen der ersten Speicheranordnung und des genannten Registers, dass die Anordnung weiterhin einen Festwertspeicher (20) aufweist, der mit einem Adressendecoder (21) versehen ist der mit einem weiteren Ausgang der ersten Speicheranordnung und mit einem Ausgang des Registers zum Adressieren von Speicherstellen in dem Festwertspeicher verbunden ist, dessen Adresse dem Inhalt der Speicherstellen der ersten Speicheranordnung und des Registers entspricht, und dass der Festwertspeicher einen Ausgang aufweist, dem der Inhalt der adressierten Speicherstellen des Festwertspeichers nacheinander zugeführt werden.

**Revendications**

1. Procédé pour rendre reproductible de l'information chiffrée qui est constituée d'une série de caractères de $m$ bits chacun, des blocs de $n$ caractères chacun étant formés dans la série de caractères, ces blocs comprenant, par conséquent, n×m bits et un bloc étant réparti en $m$ groupes de $n$ bits chacun, caractérisé en ce qu'il comprend les opérations suivantes: un dispositif de stockage est adressé successivement à l'adresse donnée par chacun des $m$ groupes et les contenus (représentations de caractères reproductibles de $m$ bits chacun) de chacun des emplacements adressés sont extraits et une série des représentations des caractères reproductibles est fournie à une sortie du dispositif de stockage en vue d'être appliquée à un dispositif de reproduction.

2. Procédé suivant la revendication 1, caractérisé en ce que m=5 et n=4, en ce que les 5 bits de chaque caractère d'un bloc de quatre caractères de ce genre sont répartis en une première partie de 4 bits et une seconde partie de 1 bit et en ce que les premières parties de chacun des caractères constituent des groupes respectifs et les secondes parties des quatre caractères constituent ensemble un autre groupe.

3. Procédé suivant la revendication 2, caractérisé en ce que la première partie est constituée par les quatre bits les plus significatifs et la seconde partie, par le bit le moins significatif.

4. Dispositif pour rendre reproductible de l'information chiffrée, cette information étant constituée d'une série de caractères de $m$ bits chacun, caractérisé en ce qu'il comprend un premier dispositif de stockage (12) qui comprend $n$ emplacements pour stocker un bloc de $n$ caractères; un registre (16) dont une entrée est connectée à une sortie du premier dispositif de stockage (12) et un premier compteur d'adresses (14) pour passer cycliquement par $n$ positions de compteur, ce compteur d'adresses étant connecté à un décodeur d'adresse (13) du premier dispositif de stockage, au moins un bit du caractère présent dans l'emplacement de stockage adressé dans chaque position de compteur étant extrait de manière destructive et appliqué au registre (16), en ce que le dispositif comprend, en outre, un deuxième compteur d'adresses (17) avec $m$ positions de compteur qui est connecté à un second décodeur d'adresse (18) du premier dispositif de stockage et au registre (16) pour adresser successivement, lors du franchissement cyclique des $m$ positions de compteur, les emplacements de stockage respectifs du premier dispositif de stockage et du registre, en ce que le dispositif comprend, en outre, une mémoire morte (20) qui est pourvue d'un décodeur d'adresse (21) connecté à une autre sortie du premier dispositif de stockage et à une sortie du registre pour adresser des emplacements de stockage dans la mémoire morte dont l'adresse correspond aux contenus des emplacements de stockage du premier dispositif de stockage et du registre, et en ce que la mémoire morte comporte une sortie à laquelle les contenus des emplacements de stockage adressés de la mémoire morte sont successivement appliquées.

6

FIG.1a

FIG.1b

FIG.2

| # | bit comb. | | | | Ch. |
|---|---|---|---|---|---|
| 0 | 0 0 0 0 | | | 1 | T |
| 1 | 1 0 0 0 | | | 1 | Z |
| 2 | 0 1 0 0 | | | 1 | L |
| 3 | 1 1 0 0 | | | 0 | A |
| 4 | 0 0 1 0 | | | 1 | H |
| 5 | 1 0 1 0 | | | 0 | S |
| 6 | 0 1 1 0 | | | 0 | I |
| 7 | 1 1 1 0 | | | 1 | Q |
| 8 | 0 0 0 1 | | | 1 | O |
| 9 | 1 0 0 1 | | | 0 | D |
| 10 | 0 1 0 1 | | | 0 | R |
| 11 | 1 1 0 1 | | | 0 | J |
| 12 | 0 0 1 1 | | | 0 | N |
| 13 | 1 0 1 1 | | | 1 | X |
| 14 | 0 1 1 1 | | | 1 | V |
| 15 | 1 1 1 1 | | | 0 | K |

```
        ( STRT )──── 23

        ┌──────────┐
        │ i:=j:=0  │──── 24
        │ RD(n,m)  │
        └──────────┘

        ┌──────────┐
        │ i:=i+1   │──── 25
        └──────────┘

          ◇ i>n? ◇ ──── 26
             │ N          Y
             │
        ┌──────────┐
        │  RD(Bᵢ)  │──── 27
        └──────────┘

        ┌──────────────┐
        │ tᵢ:=LSB(Bᵢ)  │──── 28
        └──────────────┘

        ┌──────────┐
        │ j:=j+1   │──── 29
        └──────────┘

          ◇ j<m? ◇ ──── 30
             │ Y          N
             │
  ┌───────────────┐      ┌──────────┐
  │ Aⱼ:=MSB(Bⱼ)   │─31   │ Aₘ:=T    │──── 32
  └───────────────┘      └──────────┘

        ┌──────────┐
        │ Rⱼ:=C(Aⱼ)│──── 33
        └──────────┘

          ◇ j>m? ◇ ──── 34
           N │ Y

        ( STP )──── 35
```

Block 24: $i := j := 0$ ; $RD(n,m)$

Block 25: $i := i+1$

Decision 26: $i > n?$

Block 27: $RD(B_i)$

Block 28: $t_i := LSB(B_i)$

Block 29: $j := j+1$

Decision 30: $j < m?$

Block 31: $A_j := MSB(B_j)$

Block 32: $A_m := T$

Block 33: $R_j := C(A_j)$

Decision 34: $j > m?$

FIG.3

2